(19) **Europäisches Patentamt**

**European Patent Office**

**Office européen des brevets**

(11) **EP 1 530 389 A1**

(12) **EUROPEAN PATENT APPLICATION**

(43) Date of publication:
**11.05.2005 Bulletin 2005/19**

(51) Int Cl.⁷: **H04Q 7/36**

(21) Application number: **03292776.6**

(22) Date of filing: **05.11.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicants:<br>• **Mitsubishi Electric Information Technology Centre Europe B.V.**<br>**1119 NS Schiphol Rijk (NL)**<br>Designated Contracting States:<br>**FR**<br>• **MITSUBISHI DENKI KABUSHIKI KAISHA**<br>**Chiyoda-ku Tokyo 100-8310 (JP)**<br>Designated Contracting States:<br>**NL ES FI GB MC CH SI DK LU AT DE GR LI IT EE IE SK PT BE TR CZ HU RO BG SE CY** | (72) Inventor: **Voyer, Nicolas, Mitsubishi Electric ITE**<br>**35708 Rennes Cedex 7 (FR)**<br><br>(74) Representative: **Maillet, Alain**<br>**SCP Le Guen & Maillet,**<br>**5, Place Newquay,**<br>**B.P. 70250**<br>**35802 Dinard Cedex (FR)** |

(54) **Method for optimization of a parameter or a set of parameters of a telecommunication network**

(57)    The present invention concerns a method for optimization of at least one parameter or a set of parameters of a telecommunication network that comprises a number of base stations and mobile terminals, said method including determining the value taken by a cost function for a plurality of given values of said one parameter or of said set of parameters, and selecting the value of said parameter or the parameter values of the set of parameters that minimize said cost function.

According to the invention, the value of the cost function for each parameter value or for each value of the set of parameters is calculated in order to be representative of the behaviour of said telecommunication network as to the communications between said mobile terminals and said base stations for a plurality of given mobile terminals configurations correlated one to another.

Fig. 1

## Description

The present invention concerns a method for optimization of at least one parameter of a telecommunication network. Such parameter can be the position of the base stations of the network, the radiating diagram or the tilt of the antennas of the base stations of the network or the antenna tilts. It can also be the powers of the pilot signals of a CDMA telecommunication network. Although the latter parameters are used for the present description, the invention is not limited to the powers of the pilot signals of a CDMA telecommunication network.

A telecommunication network generally comprises a number of base stations and mobile terminals which can communicate with one or more base stations of the network. In a CDMA telecommunication network, spreading codes that spread the bandwidth of the user's information are used to discriminate the communications. Depending on the power level received from each base station, a mobile terminal can communicate with one, two, three, etc. base stations. In order to assess the power level received by a mobile terminal, each base station sends toward the mobile terminal pilot signals simultaneously with the information bearing the communications. These pilot signals are borne over a specific channel which is generally called CPICH : Common Pilot Channel. Besides the fact that the CPICH pilot signals are used to synchronization purposes, their power level emitted by a base station is measured by a mobile terminal and the results of the measurements are reported to the network wherein it is decided which base station(s) the mobile terminal will continue to communicate with. This decision is hence made according to the power levels of the CPICH signals received by the mobile terminal from the base stations and threshold values known as macrodiversity window.

The use of the CPICH levels for determining which base station is in communication with a mobile terminal has the consequence that by adjusting the power levels of the CPICH pilot signals the load and the interference levels of the base stations can be balanced between them. Actually, reducing the CPICH power level of a base station causes less mobile terminals in communication with this base station while increasing this level invites more mobile terminals in communication with it.

It is important to choose the appropriate CPICH power levels of the base stations just as well during the planning process as dynamically according to the traffic conditions of the network. It is thus important that a mobile terminal is connected to at least one appropriate base station so that the power to be emitted during the communication is as small as possible in order to minimize the interference levels between the mobile terminals in communication. If a bad choice is made, the interference levels can be such the capacity of the network is severely decreased.

Methods for optimization of the power levels of the pilot signals of a CDMA telecommunication network are already known. In an article entitled "Optimization of CPICH Power and Antenna Tilt in UMTS FDD Networks, published in COST 273 TD(03) 101, A. Gerdenitsch and all propose two optimization algorithms which of one applying the so called simulated annealing method to solve the problem of the optimization of the power levels of the pilot signals of a CDMA telecommunication network.

According to the teaching of this document, the optimization process starts with an evaluation of a *fitness function* or cost function for a set of initial values of the parameters, i.e. the pilot signals power, to be optimized for all the base stations of the network. After the first evaluation, a loop process is launched comprising changing the parameters according to a certain optimization technique and evaluating at each step the *fitness function* of the new set of values of the parameters. At each step, a new set of values is chosen if the corresponding *fitness function* takes a greater value than the previous one. In order for the method to converge, a new set of values is randomly chosen, namely if a random value is lower than a certain probability, generally called the *cooling function* due to the analogy of the simulated annealing method to a physical process of heating and then slowly cooling steel. This last condition thus enables to accept a worse result than the previous one with a probability that decreases according to the *cooling function.* At the end of the process, this probability is close to zero but the method has converged toward the set of values of the pilot signals level that minimizes *the fitness function,* also said cost function.

In this document, the *fitness function* which represents the optimization goal is defined as follows :

$$Fitness = \sum_{k=1}^{N} \text{served\_users}_k$$

where served_users$_k$ is the number of served users of the base station k and N is the total number of base stations in the network.

The *coolingfunction* is defined as follows :

$$CF = e^{\dfrac{GoS_{new} - GoS}{TC}}$$

where TC denotes the cooling temperature, GoS$_{new}$ the grade of service for the new set of values of the CPICH power levels and GoS the grade of service for the set of values of the previous iteration. The grade of service is defined as follows :

$$GoS = \frac{served\_users}{existing\_users}$$

where served_users denotes the total number of served users in the network and existing_users the total number of simulated users in the same area.

The optimization process is running until a specific termination condition is fulfilled, namely the temperature TC is lower than a predetermined value.

The method described in the document enables the optimization of the CPICH power levels for an unique configuration of the number, the true positions and the offered services of the mobile terminals. The method can find an optimal solution but only for a frozen and instantaneous situation of mobile terminals with positions initially randomly chosen in order to fulfill a geographical distribution template. So, the method does not enable the optimization for every cases that can be found since the obtained set of values depend on the mobile terminals configuration which changes due to the displacement of the mobile terminals, to the number of active mobile terminals that increases or decreases, to the type of services used, etc.

Another document proposes to overcome the problem just above mentioned. It is an article of M.G. Lozano and all entitled "CPICH Powers Optimization By Means Of Simulated Annealing In An UTRA FDD Environment" published in COST 273 TD(03) 103. The described method is similar to that described in the previous document except for the cost function which is now the sum of all the transmission powers of the mobile terminals and for the goal which is to minimize the uplink load factor of all the base stations of the network. Furthermore, the method describes in that document determines the optimal CPICH pilot signals levels for each of some configurations of the mobile terminals, said also snapshots, and then determines the the optimal CPICH pilot signals levels for all these snapshots.

For each snapshot, the simulation finds an optimal or quasi-optimal combination of pilot powers, which depends on the traffic distribution of the network. In order to decide a general and appropriate combination of pilot powers for all the snapshots, the median between all combination found for different uplink load factor of the base stations is chosen as a good option. If the chosen combination gives good results in most cases, the optimality thereof is not guaranteed since this combination is a result of an arbitrary operation based on the optimizations of independent snapshots.

The proposed method converges after several minutes which makes the method non-adapted for dynamic situations since it is too long.

According to both methods, at each step of the iterative process, the cost function is assessed after having calculated the interference levels for the considered configuration of the mobile terminals, or snapshots. More particularly, each step of the iterative process comprises the following stages :

a) determining the connectivity of the mobile terminals with the base stations of the network by calculating, for each mobile terminal, the received CPICH power levels from each base station and selecting the base stations for which the power is in a macrodiversity window,

b) then determining as a solution of a power control process the transmission power emitted by each base station of the network and the transmission power of each mobile terminal,

c) then determining a cost function from the results of the power control solution.

Neither one or the other of the documents above cited provides a method for the optimization of the CPICH power levels intended for networks wherein these levels are calculated time to time and must apply for a large number of different configurations of the network between two calculations (for example, after an increase of the traffic conditions).

Both methods are time consuming which can be a very drawback for large networks to be optimized. For example, in the second document above cited, the simulation of the power control have to be performed independently for each configuration since there is no correlation between different configurations, which implies long simulation times and prevent this type of optimization method being used in real-time.

The documents cited above make the assumption that the connectivity between the mobile terminals and the base stations can be ideally made for a given configuration according to the simple rules above mentioned. Nevertheless, in practice, the connectivity is dynamic and decided by the network after having received the power measurements made by the mobile terminals. Due to the time taken by these operations that can be long, the connectivity mobile terminals/base stations is made with a delay and thus according to a configuration which is different from the actual one and for which the mobile terminals making the power measurements had different positions compared to the actual ones.

It is an object of the invention to provide a method for optimizing the powers of the pilot signals of a CDMA telecommunication network which uses the simulated annealing method above mentioned but with a cost function that solves the problems raised above which enables the optimization over the entire set of configurations.

For this purpose, the present invention concerns a method for optimization of one parameter or a set of parameters of a telecommunication network that comprises a number of base stations and mobile terminals, said method including determining the value taken by a cost function for a plurality of given values of said one parameter or of said set of parameters, and selecting the value of said parameter or the parameter values of the set of parameters that minimize said cost function.

According to the invention, the value of the cost function for each parameter value or for each value of the set of parameters is calculated in order to be representative of the behaviour of said telecommunication network as to the communications between said mobile terminals and said base stations for a plurality of given mobile terminals configurations correlated one to another. For example, the mobile terminals configurations are correlated one to another according to traffic templates and mobility templates.

Advantageously, the value taken by the cost function for is calculated based on the events that affects the communications between said mobile terminals and said base stations during the running of all the given correlated mobile terminals configurations.

The foregoing and other problems are overcome and the foregoing objects are realized by methods and apparatus in accordance with the features recited in the appended claims.

The objects and advantages of the present invention become obvious to those of ordinary skill in the art after having read the following detailed description of a preferred embodiment which is illustrated in the following drawings in which :

Fig. 1 depicts a diagram of a simulated annealing method which is used by the method of the present invention, and
Fig. 2 shows the different steps of a method according to the present invention.

The method of the present invention relies on a known optimization method, such as the so-called simulated annealing method, but differs from the method of the prior art by the assessment of the cost function as it will be seen latter. Generally speaking, a method for optimization of one parameter or a set of parameters includes a step of determining the value taken by a cost function for a plurality of given values of said one parameter or of said set of parameters, and a step of selecting the value of said parameter or the parameter values of the set of parameters that minimize said cost function.

For clarity purposes, the following description considers as an optimization method a simulated annealing method but it must be understood that the present invention is not limited to such an optimization method.

In a same way, the present invention is not limited to the powers of the pilot signals of a CDMA telecommunication network as parameters of a telecommunication network.

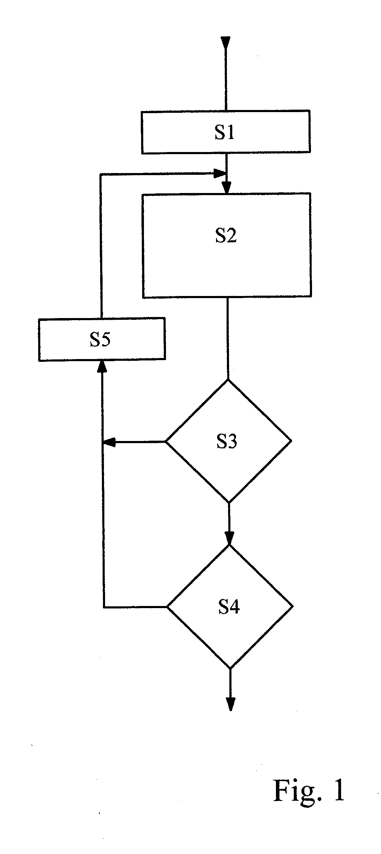

Fig. 1 depicts a diagram of a simulated annealing method carried out over a plurality of iterations.

Step S1 is an initialization step wherein an initial set of values for the parameters to be optimized, i. e. the CPICH power levels of the pilot signals emitted by the base stations of the network, is selected. Note that no condition about the configuration of the mobile terminals is required at this step.

Step S2 concerns the determination of the value taken by a cost function for each iteration of the optimization method. The method of the present invention departs from the methods of the prior art such as the methods mentioned in the preamble of the present specification by the fact that the value taken by the cost function is determined at each iteration from a same plurality of given mobile terminals configurations correlated one to another according to traffic templates and mobility templates. These configurations are also called snapshots. Step S2 is described in more details latter.

Step S3 concerns the selection of either the current set of values for the CPICH power levels or the previous set of values depending on the results of two comparisons. The current set of values is chosen if the function cost for the current set of values is lower than for the previous set of values. Otherwise, it is also chosen when a random number is lower than an acceptance probability, said probability being generally expressed in terms of a temperature that decreases along with the running of the algorithm. In all the other cases, the previous set of values is kept.

When the current set of values is chosen, then a test if a stopping condition is fulfilled is carried out at step S4.

When previous set of values is kept or when the stopping condition is not reached, a new value for the parameter or a new set of values for the parameters to be optimized, i.e. for CPICH power levels is determined at step S5. Then, the process is resumed for this new value or set of values.

In fine, when the stopping condition is fulfilled, the last selected value or set of values for the parameter, i.e. the CPICH power levels is considered as the one that enables the optimization of the parameters for the plurality of correlated configurations of the mobile terminals that was used during the process.

Note that at the end of the process, the selected value of said parameter or the selected parameter values of the set of parameters minimize said cost function.

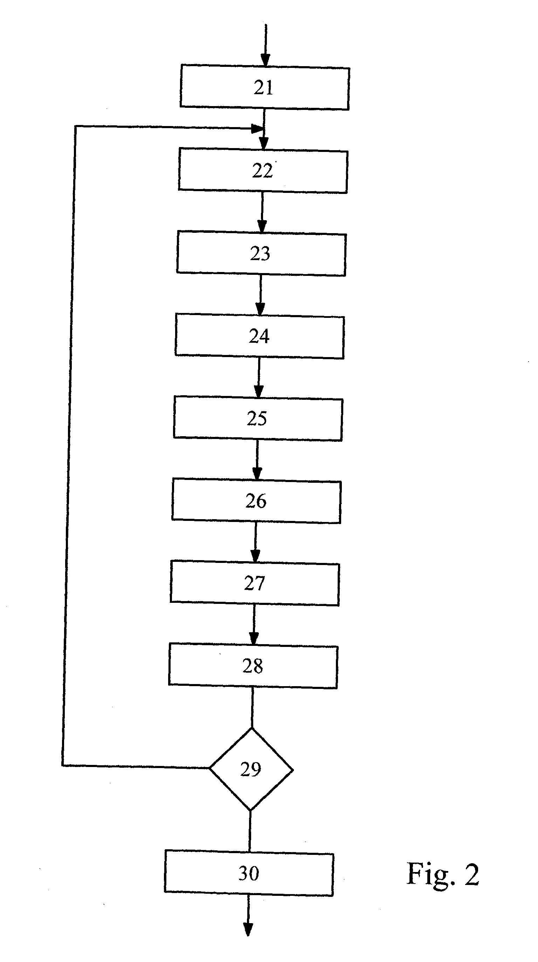

Fig. 2 shows the different steps that can be carried out in an iterative process for the assessment of the cost function according to an embodiment of the present invention (step S2 depicted in Fig. 1).

Step 21 is an initialization step wherein a configuration of a set of mobile terminal (or a snapshot) is chosen. Also, at step 21, a variable representative of the current iteration is initialized. This variable can be the time t.

From the current snapshot and from the value or the set of values for parameters to be optimized, i.e. the CPICH power levels, at the current moment, a connectivity process is carried out (step 22). For this purpose, on basis of the measurements of the power of the pilot signals as received made by the mobile terminals, step 22 determines which mobile terminals are connected to each base station. Note that the measurements of the power of the pilot signals can be made by the mobile terminals in a previous iteration.

The process can then determine at step 23 the transmission powers of all the base stations of the network and the transmission powers of all the mobile terminals under the coverage of the network. Step 23 can be carried out according to the method described in the patent document EP-A-1 148 658.

At step 24, an assessment of the instantaneous quality is performed. The instantaneous quality is computed by observing the Eb/Io levels of uplink and downlink after power control, and by comparing them with those of the target Eb/Io levels corresponding to the target quality of the service in a given environment.

During each iteration, new calls can be initiated (step 25). At this step, the measurements of the levels of the pilot power are launched.

In a same way, calls can be ended (step 26). Always in a same way, some mobile terminals can be moved according, for example, a predetermined displacement law (following street, based on the speed of the mobile terminal, etc.) (step 27).

During the steps 22 to 26, the method simulates the behavior of the telecommunication network as to the communications between the mobile terminals and the base stations thereof.

At step 28, the iteration variable is incremented and, at step 29, a stopping condition is checked. If the stopping condition is not fulfilled, a new iteration is performed which means a new snapshot which is correlated with the current one, for example by means of predefined templates, is now considered.

If the stopping condition is fulfilled, the current iteration is stopped. The stopping condition can be a time-dependant condition. For example, the stopping condition is fulfilled when a predetermined duration has expired. It can also be fulfilled when a number of snapshots have been considered. This duration enables taking a relevant set of correlated snapshots into account.

Note that at the end of the loop of the steps 22 to 29, a number of given mobile terminals configurations correlated one to another, for example according to traffic templates and mobility templates, have been considered.

At step 30, the value taken by the cost function for the value of the parameter or for the set of values of the parameters, is calculated in order to be representative of the behaviour of the telecommunication network as to the communications between said mobile terminals and said base stations for the plurality of mobile terminals configurations that was considered in steps 22 to 29.

The cost function value is for example calculated in view of the events linked to the different communications between the mobile terminals and the base stations that happened during the period of the whole iterative process. According to an embodiment of the invention, these events can be the following :

- a new call is blocked due to a blocking criteria,
- a new call is accessed,
- a communication is dropped since, for example, the Bit Error Rate is over a threshold value for more than a predetermined period,
- a communication is outed, which means that a mobile terminal becomes out of the coverage of a base station and the communication is over,
- a communication is terminated, for example due to the fact that the percentage of saturation is more than a threshold value,
- etc.

Note that some of these events are the result of decisions or measurements made in the past since this type of delay can be simulated to increase the realistic of the optimization.

The cost function can be calculated by estimating from these different events the percentage of satisfied users. For example, the cost function can be the ratio between the total number of normally terminated calls and the total number of terminated calls. The total number of calls normally terminated is the total number of terminated calls minus the total number of abnormally terminated calls. The total number of abnormally terminated calls is the sum of the total number of blocked calls, the total number of dropped communications, the total number of outed communications, the total number of terminated communications due to saturation and the total number of calls for which the quality is reduced (said "poor quality calls"). The poor quality calls can be defined as the calls for which the instantaneous quality has not been good during a predefined ratio of the call duration.

Note that the cost function can also be equal to the grade of service GOS as defined in a technical report TR 101 112 V3.2.0 of the ETSI entitled "*Selection procedures for the choice of radio transmission technologies of the UMTS*", particularly chapter B.1.6.5.

The present invention enables the optimization of the CPICH power levels by simulating a plurality of snapshots that are correlated one to another according to templates of traffic and mobility close to reality, which increase the realistic of the simulation and accuracy of the optimization.

The method of the present invention converges more rapidly than the methods of the prior art since the set of starting values of power levels for one iteration is the set of converged values of the previous iteration.

The method of the present invention takes the connectivity defaults between mobile terminals and base stations into account because these defaults generally result from decisions taken at a time from measurements made before that time. As each iteration lasts a relatively long period of time, such types of defaults are thus taken into account.

**Claims**

1. Method for optimization of at least one parameter or a set of parameters of a telecommunication network that comprises a number of base stations and mobile terminals, said method including determining the value taken by a cost function for a plurality of given values of said one parameter or of said set of parameters, and selecting the value of said parameter or the parameter values of the set of parameters that minimize said cost function, **characterized in that** the value of the cost function for each parameter value or for each value of the set of parameters is calculated in order to be representative of the behaviour of said telecommunication network as to the communications between said mobile terminals and said base stations for a plurality of given mobile terminals configurations correlated one to another.

2. Method for optimization according to claim 1, **characterized in that** the mobile terminals configurations are correlated one to another according to traffic templates and mobility templates.

3. Method for optimization according to claim 1 or 2, **characterized in that** the cost function is calculated based on the events that affects the communications between said mobile terminals and said base stations during the running of all the given correlated mobile terminals configurations.

4. Method for optimization according to claim 3, **characterized in that** the events are of one of the following type :

   - a new call is blocked due to a blocking criteria,
   - a new call is accessed,
   - a communication is dropped,
   - a communication is outed,
   - a communication is terminated.

5. Method for optimization according to claim 3 or 4, **characterized in that** the cost function includes a step of determining the number of said total events of each type of events and a step of estimating from said numbers the percentage of satisfied users.

6. Method for optimization according to claim 5, **characterized in that** the value taken by said cost function is the ratio between the total number of normally terminated calls and the total number of terminated calls, the total number of calls normally terminated being the total number of terminated calls minus the total number of abnormally terminated calls and the total number of abnormally terminated calls being the sum of the total number of blocked calls, the total number of dropped communications, the total number of outed communications, the total number of terminated communications due to saturation and the total number of poor quality calls.

7. Method for optimization according to claim 6, **characterized in that** the poor quality calls include the calls for which the instantaneous quality has not been good enough during a predefined ratio of the call duration.

8. Method according to claim 1, **characterized in that** the value taken by the cost function is equal to the grade of service.

9. Method according to one of the previous ones, **characterized in that** the step of selecting the value of said parameter or the parameter values of the set of parameters that minimize said cost function is carried out by a simulated annealing method.

10. Method according to one of the previous one, **characterized in that** set of parameters comprises one of the followings :

    - the position of the base stations of the network,
    - the radiating diagram or the tilt of the antennas of the base stations of the network
    - the powers of the pilot signals of the telecommunication network.

Fig. 1

Fig. 2

**European Patent Office**

## EUROPEAN SEARCH REPORT

Application Number

EP 03 29 2776

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 1 335 617 A (MITSUBISHI ELECTRIC INF TECH) 13 August 2003 (2003-08-13) par. [0012]-[0014], [0020], [0029],[0033],[0039]. ----- | 1-10 | H04Q7/36 |
| Y | DEMESTICHAS P ET AL: "Computationally efficient algorithms for location area planning in future cellular systems" COMPUTER COMMUNICATIONS, ELSEVIER SCIENCE PUBLISHERS BV, AMSTERDAM, NL, vol. 23, no. 13, July 2000 (2000-07), pages 1263-1280, XP004200487 ISSN: 0140-3664 * page 1265, paragraph 2 * * page 1273, right-hand column, line 11 - line 17 * * page 1265; figure 2 * ----- | 1-10 | |
| A | WO 03/037018 A (LAIHO JAANA ; NOVOSAD TOMAS (FI); HOEGLUND ALBERT (FI); NOKIA CORP (FI) 1 May 2003 (2003-05-01) * page 5, line 10 - line 11 * * page 5, line 27 - page 8, line 20 * ----- | 1-10 | **TECHNICAL FIELDS SEARCHED** (Int.Cl.7)<br>H04Q |
| A | US 6 044 273 A (TEKINAY SIRIN) 28 March 2000 (2000-03-28) * column 2, line 29 - column 3, line 10 * ----- | 1-10 | |

The present search report has been drawn up for all claims

| Place of search | Date of completion of the search | Examiner |
|---|---|---|
| The Hague | 22 April 2004 | Gerling, J.C.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 29 2776

This annex lists the patent family members relating to the patent documents cited in  the above-mentioned European search report.
The members are as contained in the European Patent Office EDP file on
The European Patent Office is in no way  liable for these particulars which are merely  given for the purpose of information.

22-04-2004

| Patent document cited in search report | | Publication date | Patent family member(s) | | Publication date |
|---|---|---|---|---|---|
| EP 1335617 | A | 13-08-2003 | EP | 1335617 A1 | 13-08-2003 |
| WO 03037018 | A | 01-05-2003 | WO | 03037018 A1 | 01-05-2003 |
| | | | WO | 03037019 A1 | 01-05-2003 |
| US 6044273 | A | 28-03-2000 | NONE | | |

EPO FORM P0459

For more details about this annex : see Official Journal of the European Patent Office, No. 12/82